# EUROPEAN PATENT SPECIFICATION

(11) **EP 1 862 335 B1**
(45) Date of publication and mention of the grant of the patent: **28.04.2010**
(21) Application number: 07109118.5
(22) Date of filing: 29.05.2007
(51) Int. Cl.: B60G 11/27, B60G 11/28

(54) **An assembled type pistion of an air spring for a motor vehicle**
Montierter Kolben einer Luftfeder für ein Motorfahrzeug
Piston de type assemblé de ressort pneumatique pour véhicule à moteur

(30) Priority: 31.05.2006 IT TO20060083 U
(43) Date of publication of application: 05.12.2007
(73) Proprietor: C.F. GOMMA S.p.A., 25050 Passirano (Brescia) (IT)
(72) Inventor: Cazzaniga, Andrea, 20030 Seveso (Milano) (IT); Popescu, George Gabriel, 20133 Milano (IT); Ravasi, Gabriele, 20040 Usmate Velate (Milano) (IT)
(74) Representative: Fioravanti, Corrado

(56) References cited:
- EP-A- 0 160 371
- DE-B- 1 285 792
- DE-U1- 20 210 955
- FR-A1- 2 717 237
- FR-A3- 2 827 550

## Description

The present invention relates in general to air springs for motor-vehicle suspensions, particularly for commercial vehicles and, more specifically, to a piston for connecting an air spring to an axle.

Air springs of this type are used in motor vehicles to connect an axle to the chassis or to another load-bearing structure and have the function of an adjustable, resilient support for "absorbing" the unevenness of the road or of the ground over which the vehicle is travelling.

An air spring conventionally comprises a plate which can be fixed directly or indirectly to the chassis of a vehicle, a piston for connection to the axle, and a substantially cylindrical diaphragm which is made of resilient material, is interposed between the above-mentioned elements, and is connected to them in a manner such as to form a leaktight coupling. The diaphragm forms in its interior a region which can be filled with air or other gas.

The Applicant's Italian utility model application T02001U000124 describes an air-spring piston according to the preamble to Claim 1. This piston comprises a head element which can define a bearing surface for the end of a diaphragm of the air spring and a rigid insert which is fixed to the head element and is intended to be connected to the vehicle axle.

The head element is made of a single piece of plastics material and comprises a radially inner, boss-like portion to which the insert is fixed, a radially intermediate, substantially cup-shaped portion the base wall of which is connected to the radially inner portion, and a radially outer, substantially skirt-like portion which is connected to the outer lateral surface of the intermediate portion, the upper end of the intermediate portion projecting above the outer portion so as to define an annular projection on which a rim of the diaphragm can be fitted in a leaktight manner.

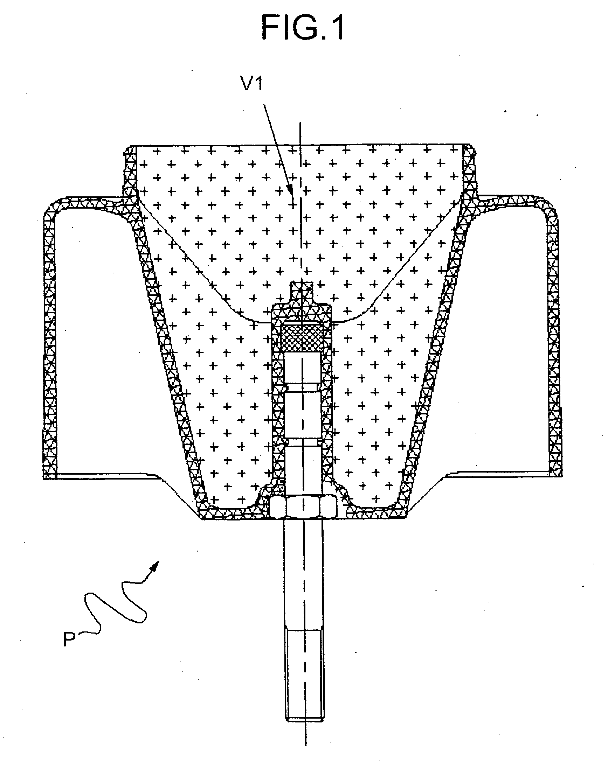

The solution described above has the disadvantage of providing an auxiliary reservoir which is limited in comparison with the overall dimensions of the piston. As is in fact known, in order to reduce the stiffness of the air spring and thus to improve comfort when the vehicle is in motion, in addition to the reservoir that is present inside the diaphragm, use is made of an additional reservoir, known as the auxiliary reservoir, which is inside the piston. A small auxiliary reservoir thus leads to greater stiffness of the air spring. Figure 1 shows in section a piston P according to T02001U000124 in which the portion occupied by the auxiliary reservoir V1 is shown filled with "+" signs.

FR 2827550 discloses a piston comprising a head element which can define a bearing element surface for the end of a diaphragm of the air spring and a rigid insert.

The object of this invention is to provide an air-spring piston which is made of plastics material but nevertheless provides a larger auxiliary reservoir than those of the prior art.

This object is achieved according to the invention by an air-spring piston the main characteristics of which are defined in Claim 1.

Preferred embodiments of the invention are referred to in the dependent claims.

The characteristics and advantages of an air-spring piston according to the invention will become clear from the following detailed description of a preferred but non-limiting embodiment of the invention, which is given with reference to the appended drawings in which:
- Figure 1 is a section through an air-spring piston according to the prior art,
- Figure 2 is a perspective view of an air-spring piston according to the present invention, prior to assembly,
- Figure 3 is a section through the piston of Figure 2,
- Figure 4 is a perspective view of the piston of Figure 2, after assembly, and
- Figure 5 is a section through the piston of Figure 4.

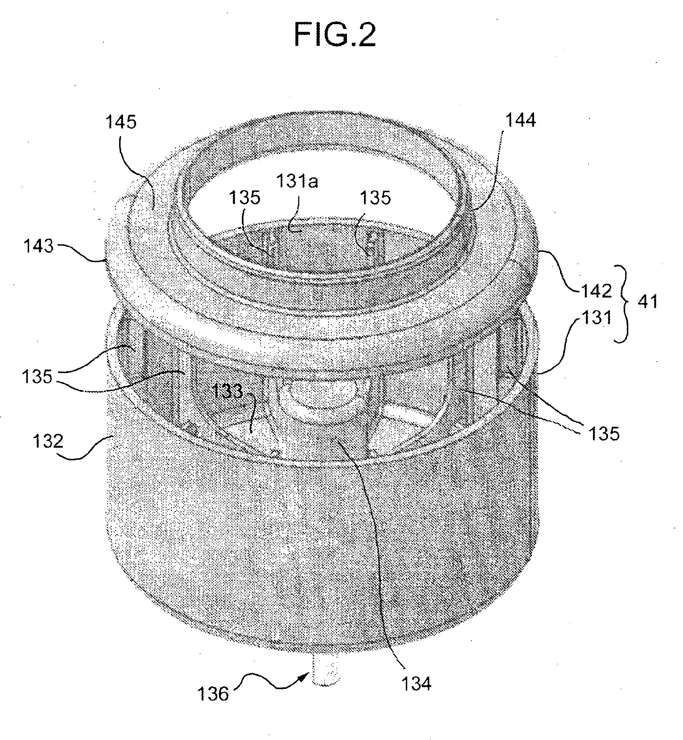

Figures 2 to 5 show an air-spring piston 10 according to the present invention.

The piston 10 comprises a head element 41 made of plastics material, for example, of 6 or 6/6 nylon, preferably reinforced with glass fibre, and is intended to provide a bearing surface for a diaphragm M, shown schematically in broken outline.

The substantially cylindrical head element 41 comprises a cup-shaped portion 131 which is formed in one piece, for example, by moulding, and is intended to be arranged with its opening 141 a facing towards the air-spring diaphragm M. The cup-shaped portion 131 has a substantially cylindrical side wall 132 and a base wall 133. A boss 134 is formed integrally on the base wall 133 inside the cup-shaped portion 131 and is also connected to the side wall 132 of the cup-shaped portion 131 by radial reinforcing ribs 135.

The boss 134 can house a metal insert 136 for connection to a vehicle axle either directly or indirectly by means of other suspension elements. The insert 136 comprises a rod 137 which is partially housed in the boss, for example, by co-moulding. The rod 137 is anchored to the plastics of the boss 134 by anchoring means 138.

In the embodiment shown, the metal insert is formed by a single die-formed rod element which is provided with projections 138 for anchorage to the plastics of the boss 134 and, in the vicinity of the base of the head element 41, with a flange 139 for the discharge of the clamping load.

The head element 41 further comprises a cover portion 142 which is formed in one piece, for example, by moulding, and is intended for partially closing the opening 131 a. The cover portion 142 is substantially annular and has a peripheral wall 143 and a collar portion 144 which are connected to one another by a flange portion 145. The peripheral wall 143 and the collar portion 144 extend axially on opposite sides of the flange portion 145. The collar portion 144 of the cover portion 141 thus projects relative to the flange portion 145. The collar portion 144 is arranged, in conventional manner, for the leaktight mounting of the rim of the air-spring diaphragm M. The flange portion 145 provides a bearing surface for the lower end of the air-spring diaphragm M.

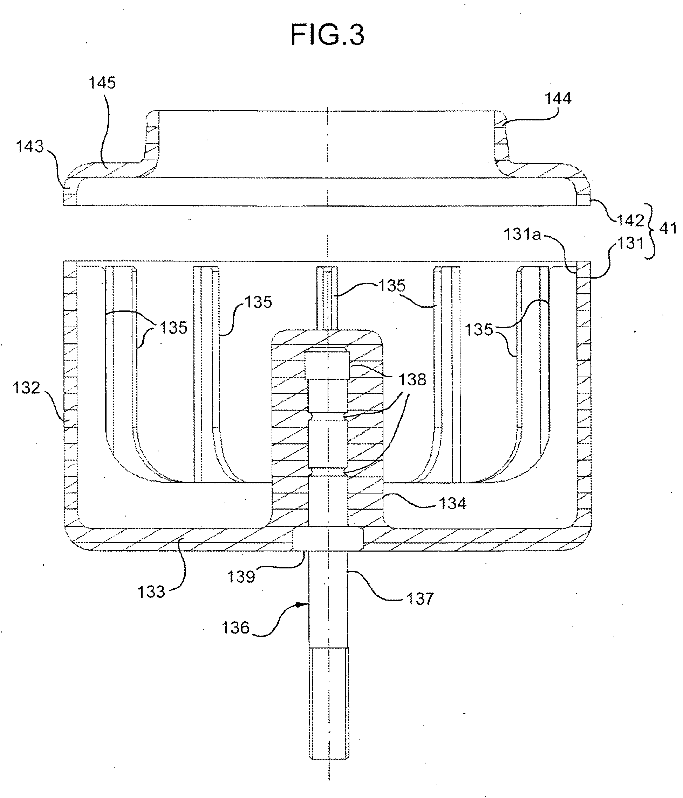

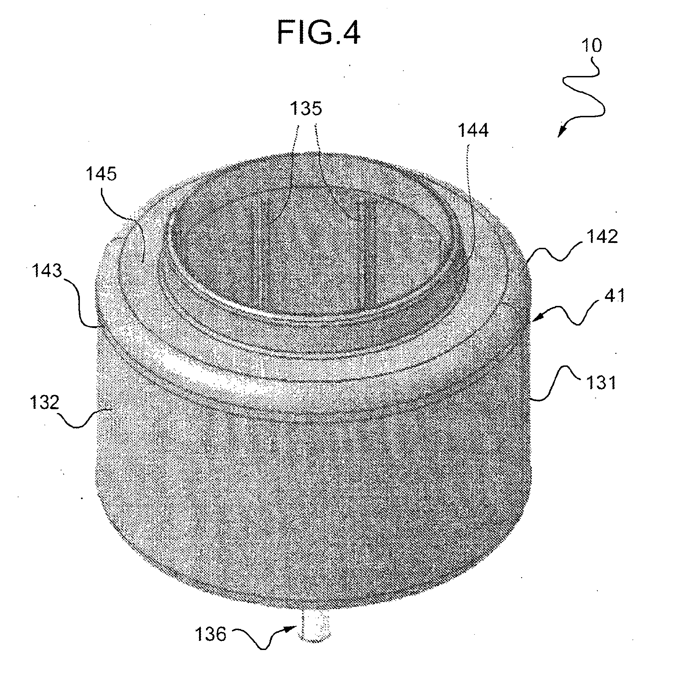

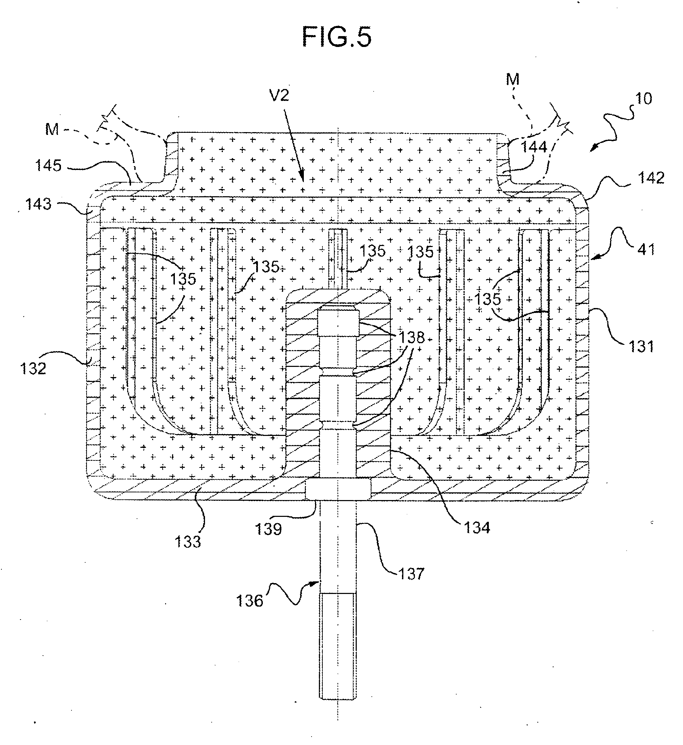

The free end of the peripheral wall 143 of the cover portion 142 has a thickness and an extent such that it can be aligned (as shown in Figures 2 and 3), for the assembly of the piston 10, with the free end of the side wall 132 of the cup-shaped portion 131. The peripheral wall 143 of the cover portion 142 is then butt-welded to the side wall 132 of the cup-shaped portion (as shown in Figures 4 and 5) so as to provide an auxiliary reservoir V2 which extends through a predominant part of the space occupied by the head element 41. In other words, in the piston 10, there is a single cavity, that is, the cavity defined by the cup-shaped portion 131 and by the cover portion 142, welded together; the whole of this cavity contributes to the auxiliary reservoir V2 of the air spring. The welding, which may take place by means of ultrasound or rotary friction, is carried out in a manner such as to achieve mechanical strength comparable with that of the starting plastics material and suitable air-tightness.

As will be appreciated, by forming the head element 41 in two parts that are welded together, it is possible to produce a plastics piston with a large auxiliary reservoir which is not possible with the one-piece pist on described in T02001U000124 because of the technological limitations imposed by the need to extract the piece from the mould.

The invention is not intended to be limited to the embodiments described herein which should be considered simply as examples of implementation; rather, the invention may be varied in many ways in accordance with the numerous possible variants which will seem appropriate to persons skilled in the art and which are intended to be included within the scope of the invention as defined by the appended claims.

## Claims

1. An air-spring piston (10) for connecting the air-spring to a motor-vehicle axle, the piston comprising,
- a head element (41) which is made of plastics material and can define a bearing surface for an end of a diaphragm (M) of the air spring, and
- a rigid insert (136) which is fixed to the head element (41) and is intended to be connected to the vehicle axle,
**characterized in that** the head element (41) comprises
a one-piece, cup-shaped portion (131) comprising a side wall (132) and a base wall (133) in which is formed integrally a central boss-like portion (134) to which the insert (136) is fixed, and
a substantially annular, one-piece cover portion (142) comprising a collar portion (144) and a peripheral wall (143) which are connected to one another by a flange portion (145), wherein the collar portion (144) and the peripheral wall (143) extend axially on opposite sides of the flange portion (145), the collar portion (144) being arranged for the leaktight mounting of the end of the diaphragm, and the peripheral wall (143) being butt-welded to the side wall (132) of the cup-shaped portion (131).

2. A piston according to Claim 1 in which radial reinforcing ribs (135) are formed between the central portion (134) and the side wall (132) of the head element (41).

3. A piston according to Claim 1 or 2 in which the flange portion (145) defines a bearing surface for the air-spring diaphragm (M).

4. A piston according to any one of the preceding claims in which the insert is made of metal and comprises anchoring means (138) for connecting the insert (136) to the head element (41).

5. A piston according to any one of the preceding claims in which at least one of the cup-shaped portion (131) and the cover portion (142) of the head element (41) is made of a polyamide, preferably a 6 or 6/6 polyamide, optionally filled with glass fibre.

## Patentansprüche

1. Luftfederkolben (10) zum Verbinden der Luftfeder mit einer Kraftfahrzeugachse, wobei der Kolben Folgendes umfasst:
- ein Kopfelement (41), das aus Kunststoffinaterial gefertigt ist und eine Auflagefläche für ein Ende einer Membran (M) der Luftfeder bildet, und
- einen starren Einsatz (136), der am Kopfelement (41) befestigt und zur Verbindung mit der Fahrzeugachse gedacht ist,
**dadurch gekennzeichnet, dass** das Kopfelement (41) Folgendes umfasst:
ein einteiliges becherförmiges Teil (131), das eine Seitenwand (132) und eine Grundwand (133) umfasst, in der ein knopfartiges Mittelteil (134) integriert ist, an welchem der Einsatz (136) befestigt ist, und
ein im Wesentlichen ringförmiges einteiliges Abdeckteil (142), das ein Ringteil (144) und eine Umfangswand (143) umfasst, die durch ein Flanschteil (145) miteinander verbunden sind, wobei sich das Ringteil (144) und die Umfangswand (143) an gegenüberliegenden Seiten des Flanschteils (145) axial erstrecken, wobei das Ringteil (144) zur lecksicheren Befestigung des Endes der Membran angeordet ist und die Umfangswand (143) an der Seitenwand (132) des becherförmigen Teils (131) stumpf angeschweißt ist.

2. Kolben gemäß Anspruch 1, wobei radiale Verstärkungsrippen (135) zwischen dem Mittelteil (134) und der Seitenwand (132) des Kopfelements (41) gebildet sind.

3. Kolben gemäß Anspruch 1 oder 2, wobei das Flanschteil (145) eine Auflagefläche für die Luftfedermembran (M) bildet.

4. Kolben gemäß einem der vorhergehenden Ansprüche, wobei der Einsatz aus Metall gefertigt ist und Verankerungsmittel (138) zum Verbinden des Einsatzes (136) mit dem Kopfelement (41) umfasst.

5. Kolben gemäß einem der vorhergehenden Ansprüche, wobei zumindest eines von dem becherförmigen Teil (131) und dem Abdeckteil (142) des Kopfelements (41) aus einem Polyamid, vorzugsweise einem 6- oder 6/6-Polyamid, das gegebenenfalls mit Glasfaserstoff gefüllt ist, gefertigt ist.

## Revendications

1. Piston (10) à ressort pneumatique pour raccorder le ressort pneumatique à un essieu de véhicule à moteur, le piston comprenant :
un élément (41) de tête qui est réalisé à partir d'une matière plastique et peut définir une surface de palier pour une extrémité d'un diaphragme (M) du ressort pneumatique, et
un insert (136) rigide qui est fixé sur l'élément (41) de tête et est prévu pour être raccordé à l'essieu de véhicule,
**caractérisé en ce que** l'élément (41) de tête comprend :
une partie (131) d'un seul tenant en forme de coupelle comprenant une paroi (132) latérale et une paroi (133) de base dans laquelle est formée de manière solidaire une partie (134) centrale en forme de bosse à laquelle l'insert (136) est fixé, et
une partie (142) de couvercle d'un seul tenant sensiblement annulaire comprenant une partie (144) de collier et une paroi (143) périphérique qui sont raccordées l'une à l'autre par une partie (145) de rebord, dans lequel la partie (144) de collier et la paroi (143) périphérique s'étendent de manière axiale sur les côtés opposés de la partie (145) de rebord, la partie (144) de collier étant agencée pour le montage étanche aux fuites de l'extrémité du diaphragme, et la paroi (143) périphérique étant soudée bout à bout sur la paroi (132) latérale de la partie (131) en forme de coupelle.

2. Piston selon la revendication 1, dans lequel des nervures (135) de renforcement radiales sont formées entre la partie (134) centrale et la paroi (132) latérale de l'élément (41) de tête.

3. Piston selon la revendication 1 ou 2 dans lequel la partie (145) de rebord définit une surface de palier pour le diaphragme (M) du ressort pneumatique.

4. Piston selon l'une quelconque des revendications précédentes, dans lequel l'insert est réalisé à partir de métal et comprend des moyens (138) d'ancrage pour raccorder l'insert (136) à l'élément (41) de tête.

5. Piston selon l'une quelconque des revendications précédentes, dans lequel au moins l'une parmi la partie (131) en forme de coupelle et la partie (142) de couvercle de l'élément (41) de tête est réalisée à partir d'un polyamide, de préférence un polyamide 6 ou 6/6, facultativement renforcé avec des fibres de verre.
